# EUROPEAN PATENT APPLICATION

(11) **EP 3 697 039 A1**
(43) Date of publication of application: **19.08.2020**
(21) Application number: 19180813.8
(22) Date of filing: 18.06.2019
(51) Int. Cl.: H04L 12/803, H04L 29/08

(54) **LOAD-BALANCED ENDPOINTS SELECTION FOR CLIENT DEVICES ACCESSING THE ENDPOINTS VIA A NETWORK**

(30) Priority: 15.02.2019 US 201916277714
(71) Applicant: Juniper Networks, Inc., Sunnyvale, CA 94089 (US)
(72) Inventor: RAMAMURTHY, Sai Sundar, Sunnyvale, CA California 94089 (US); KUMAR, Rajneesh, Sunnyvale, CA California 94089 (US); JAIN, Bhaskar, Sunnyvale, CA California 94089 (US); SUBRAHMANYA, Ravi Kumar G V, Sunnyvale, CA California 94089 (US); GUPTA, Sanjay Kumar, Sunnyvale, CA California 94089 (US); DILIP, Unni, Sunnyvale, CA California 94089 (US); PARUCHURI, Vijay Sai Ram, Sunnyvale, CA California 94089 (US)
(74) Representative: D Young & Co LLP

(57) **Abstract**

Techniques are described for selecting, with an intermediate device, a preferred remote endpoint from a plurality of remote endpoints accessible to a client computing device via a network and indicating the preferred remote endpoint to the client computing device. For example, an intermediate device may intercept a DNS response from a DNS load balancer that load balances service requests across multiple remote endpoints that provide the requested service. Based on values for one or more network performance metrics for network traffic from each of the multiple endpoints to the intermediate device, the intermediate device may modify the priority of IP addresses included in the DNS response. The intermediate device may, for instance, replace an original primary IP address in the DNS response with an IP address for another one of the remote endpoints for which the intermediate device measured better network performance metrics.

## Description

### TECHNICAL FIELD

The disclosure relates to computer networks and, more particularly, to communicating packets within computer networks.

### BACKGROUND

A computer network is a collection of interconnected computing devices that can exchange data and share resources. In a packet-based network, such as the Internet, the computing devices communicate data by dividing the data into variable-length blocks called packets, which are individually routed across the network from a source device to a destination device. The destination device extracts the data from the packets and assembles the data into its original form.

A domain name system (DNS) is a system that stores information associated with hostnames in a distributed database on networks, such as the Internet. In particular, the DNS system associates hostnames with corresponding Internet Protocol (IP) addresses. A set of hostnames belonging to an organization can be grouped into a domain by associating each of the hostnames of the organization with a common domain name. In this manner, DNS allows hard to remember IP addresses to be associated with easy to remember hostnames and/or domain names.

When a computing device executes an application, such as a web browser, email client, or distributed application, and the application makes a request that necessitates a DNS lookup, the application sends a DNS query that includes a hostname to a DNS server. The DNS server retrieves an IP address associated with the hostname indicated in the DNS query. The DNS server returns the IP address in a DNS response to the client application, which uses the IP address to, e.g., access a server hosting a service.

Users may expect services to be provided by the service provider with an acceptable level of quality, commonly referred to as Quality of Experience (QoE). The QoE may be measured based on various parameters, including latency, delay (inter frame gap), jitter, packet loss, and/or throughput. The users may define desired levels for one or more of the parameters for the QoE that the users expect in service contracts, e.g., service level agreements (SLAs), with the service provider.

### SUMMARY

The invention is defined in the appended claims. In general, the disclosure describes techniques for selecting, with an intermediate device, a preferred remote endpoint from a plurality of remote endpoints accessible to a client computing device via a network and indicating the preferred remote endpoint to the client computing device. For example, an intermediate device may intercept a DNS response from a DNS load balancer that load balances service requests across multiple remote endpoints that provide the requested service. Based on values for one or more network performance metrics for network traffic from each of the multiple endpoints to the intermediate device, the intermediate device may modify the priority of IP addresses included in the DNS response. The intermediate device may, for instance, replace an original primary IP address in the DNS response with an IP address for another one of the remote endpoints for which the intermediate device measured better network performance metrics than those for the remote endpoint associated with the original primary IP address specified by the DNS load balancer in the DNS response.

The techniques may provide one or more technical advantages that provide a practical application. For instance, by modifying the priority of IP addresses as specified in the DNS response based on network performance metrics, the intermediate device may provide a client device with a DNS response that specifies a primary IP address for an endpoint that meets or best satisfies the requirements of a given SLA or is otherwise preferable to the original primary IP address specified by a DNS load balancer.

In one example, various aspects of the techniques described herein are directed to a method comprising: receiving, by an intermediate device situated on respective network paths that traverse a network connecting a client device and a plurality of endpoints that each offers a same service and are mapped to a same hostname, a Domain Name System (DNS) message that indicates the plurality of endpoints; determining, by the intermediate device, based on respective sets of network performance metrics for the plurality of endpoints, that a first endpoint of the plurality of endpoints is preferable for offering the service to the client device; generating, by the intermediate device, in response to the DNS message and based on determining that the first endpoint is preferable for offering the service to the client device, a DNS response that specifies an Internet Protocol (IP) address of the first endpoint as a primary IP address; and sending, by the intermediate device, the DNS response to the client device to cause the client device to send a service request to the IP address of the first endpoint.

In yet another example, various aspects of the techniques described herein are directed to a network device, wherein the network device is situated on respective network paths that traverse a network connecting a client device and a plurality of endpoints that each offers a same service and are mapped to a same hostname, the network device comprising: a memory; and one or more processors in communication with the memory, the one or more processors configured to: receive a Domain Name System (DNS) message that indicates the plurality of endpoints; determine, based on respective sets of network performance metrics for the plurality of endpoints, that a first endpoint of the plurality of endpoints is preferable for offering the service to the client device; generate, in response to the DNS message and based on determining that the first endpoint is preferable for offering the service to the client device, a DNS response that specifies an Internet Protocol (IP) address of the first endpoint as a primary IP address; and send, the DNS response to the client device to cause the client device to send a service request to the IP address of the first endpoint.

In yet another example, various aspects of the techniques described herein are directed to a computer-readable storage medium of a network device situated on respective network paths that traverse a network connecting a client device and a plurality of endpoints that each offers a same service and are mapped to a same hostname, the network device storing instructions that cause a processor to: receive a Domain Name System (DNS) message that indicates the plurality of endpoints; determine, based on respective sets of network performance metrics for the plurality of endpoints, that a first endpoint of the plurality of endpoints is preferable for offering the service to the client device; generate, in response to the DNS message and based on determining that the first endpoint is preferable for offering the service to the client device, a DNS response that specifies an Internet Protocol (IP) address of the first endpoint as a primary IP address; and send, the DNS response to the client device to cause the client device to send a service request to the IP address of the first endpoint.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

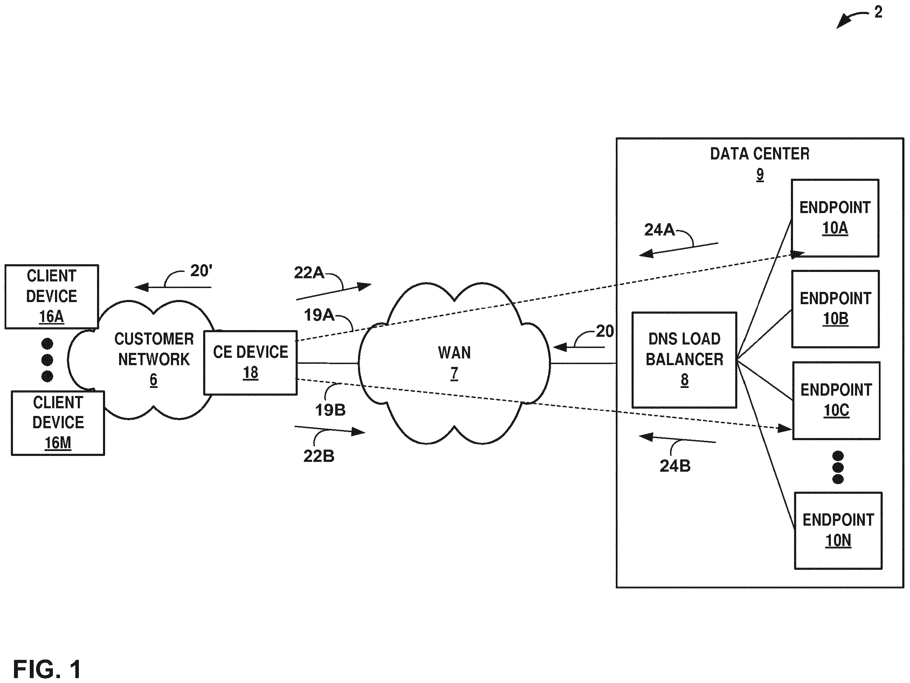

FIG. 1 is a block diagram illustrating an example network system having an intermediate device that selects a preferred remote endpoint from a plurality of remote endpoints accessible to a client computing device via a network and indicates the preferred remote endpoint to the client computing device, in accordance with techniques of this disclosure.

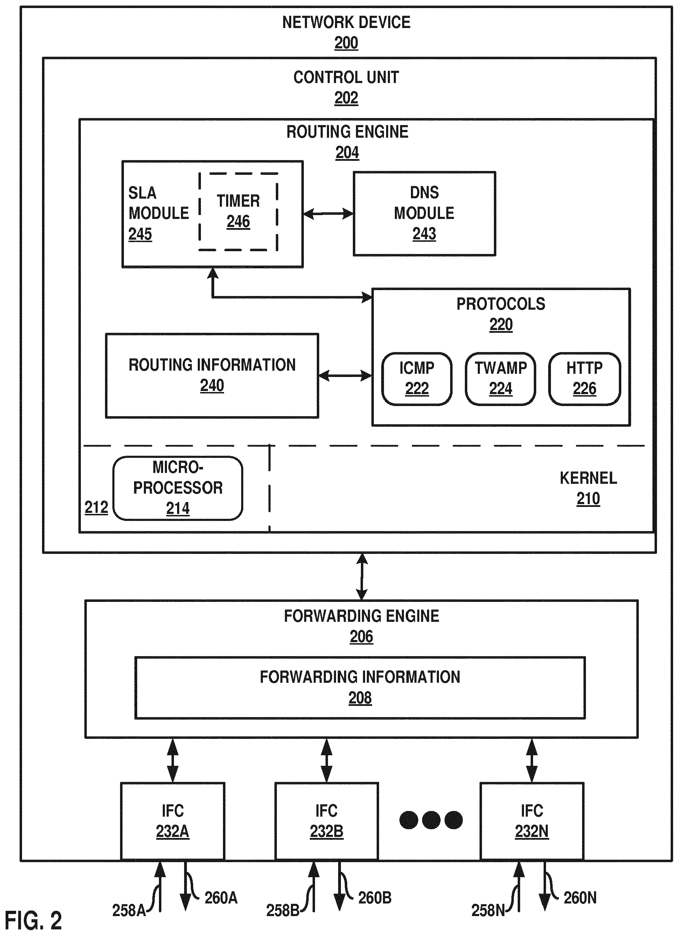

FIG. 2 is a block diagram illustrating an example network device configured to select a preferred remote endpoint from a plurality of remote endpoints accessible to a client computing device via a network and indicates the preferred remote endpoint to the client computing device, in accordance with techniques described herein.

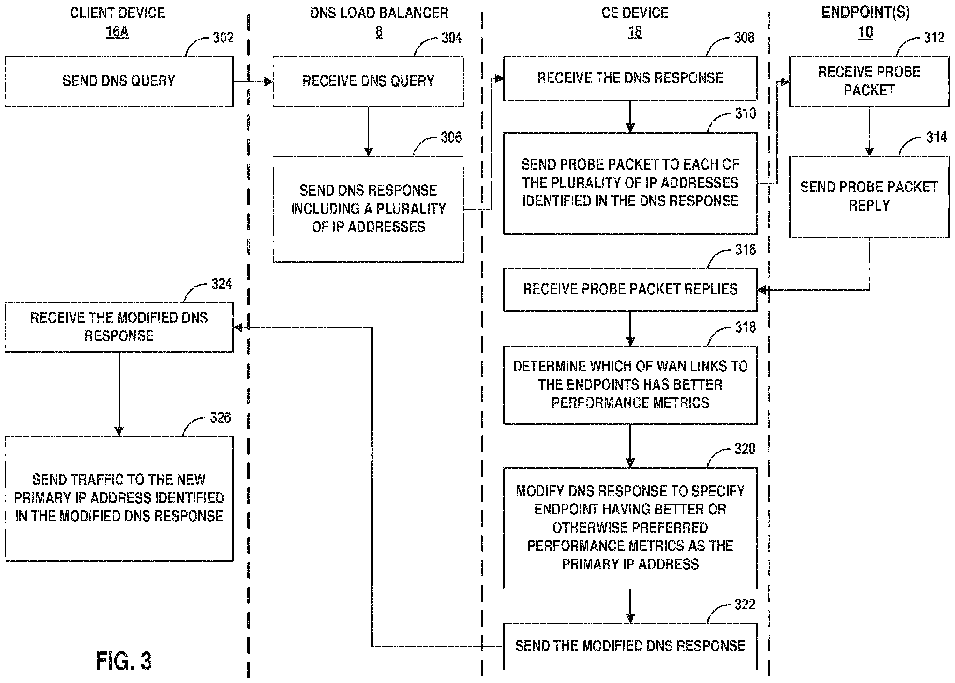

FIG. 3 is a flow diagram illustrating an example operation of one or more aspects of the techniques described in this disclosure.

### DETAILED DESCRIPTION

FIG. 1 is a block diagram illustrating an example network system 2 having an intermediate device that selects a preferred remote endpoint from a plurality of remote endpoints accessible to a client computing device via a network and indicates the preferred remote endpoint to the client computing device, in accordance with techniques of this disclosure. In the example of system 2, a wide area network (WAN) 7 connects customer network 6 to data center 9. WAN 7 may be deployed by a service provider to enable network access for client devices 16A-16M (collectively, "client devices 16") such that the client devices may exchange data packets with any of endpoints 10A-10N (collectively, "endpoints 10") of data center 9.

In the example of FIG. 1, customer network 6 includes one or more client devices 16. A customer may include, for instance, an enterprise, a residential subscriber of a service provider, or a mobile subscriber of the service provider. Client devices 16 may be, for example, real or virtual servers, personal computers, laptop computers, smart phones, tablets, or other types of computing devices positioned behind network devices that may provide local routing and switching functions. Each of client devices 16 may run a variety of software applications, such as distributed applications, word processing and other office support software, web browsing software, software to support voice calls, video games, video conferencing, and email, among others. Client devices 16 may also be a variety of network-enabled devices, referred generally to as "Internet-of-Things" (IoT) devices, such as cameras, sensors, televisions, appliances, etc.

Customer network 6 aggregates data traffic for one or more of client devices 16 for transport to/from WAN 7. Customer network 6 includes network nodes that execute communication protocols to transport control and user data to facilitate communication between client devices 16 and endpoints 10. Customer network 6 may include an enterprise network, a data center network, a home network, or other network. Customer network 6 may include a broadband access network, a wireless LAN, a public switched telephone network (PSTN), a customer premises equipment (CPE) network, or other type of access network, and may include or otherwise provide connectivity for cellular access networks, such as a radio access network (RAN) (not shown). Examples include networks conforming to a Universal Mobile Telecommunications System (UMTS) architecture, an evolution of UMTS referred to as Long Term Evolution (LTE), LTE Advanced (LTE-A), 5G, mobile IP standardized by the Internet Engineering Task Force (IETF), as well as other standards proposed by the 3^{rd} Generation Partnership Project (3GPP), 3^{rd} Generation Partnership Project 2 (3GGP/2) and the WiMAX forum.

Customer network 6 includes CE device 18 positioned at an edge of customer network 6. CE device 18 interfaces with a network, such as WAN 7, to route, switch or otherwise forward network traffic directed to and/or originating from customer network 6. CE device 18 may represent a router, switch, real or virtual server, or other suitable network device capable of forwarding network traffic and performing SLA measurements, as further described below. CE device 18 is an intermediate device in that network traffic destined to client devices 16 or sourced from client devices 16 traverses CE device 18. Other devices (not shown) in other example systems 2 may operate as intermediate devices between client devices 16 and endpoints 10. Other examples of intermediate devices may include routers, security devices such as firewalls or other intrusion detection and prevent systems, switches, servers, load balancers, and tunneling devices.

WAN 7 offers packet-based connectivity to client devices 16 attached to customer network 6 for accessing data center 9. WAN 7 may represent a public network that is owned and operated by a service provider to interconnect a plurality of networks, which may include customer network 6 and a data center network of data center 9. WAN 7 may represent a layer three (L3) network and may include multiple intermediate routing and switching devices (not shown) that transport data traffic over links between data centers, such as customer network 6 and data center 9. As examples, WAN 7 may provide bulk data delivery, voice over Internet protocol (VoIP), Internet Protocol television (IPTV), Short Messaging Service (SMS), Wireless Application Protocol (WAP) service, or customer-specific application services. In some examples, WAN 7 may represent a software-defined WAN ("SD-WAN") that utilizes, for example, the internet to connect customer network 6 and data center 9. An SD-WAN is a software-defined approach to managing the wide-area network. Although described in terms of a WAN 7, the techniques are suitable for other types of networks that connect client devices to endpoints.

A network service provider that administers at least parts of network 2 typically offers network services to customers associated with devices, e.g., client devices 16, that access service provider network 2. As described above, WAN 7 may support multiple types of access network infrastructures that connect to service provider network access gateways to provide access to the offered network services. In some instances, system 2 may include client devices 16 that attach to multiple different customer networks 6 having varying architectures.

In general, any one or more of client devices 16 may execute an application, such as a distributed application, a client application, a web browser, or an email application, to access a service hosted on each of endpoints 10. Services may include any application service, such as a website, a web application, a distributed application, a database service, and so forth. Endpoints 10 may be web or application host servers of data center 9. Each of endpoints 10 may execute one or more virtual machines or containers that execute applications that provide services that may be requested by any of client devices 16. Each of endpoints 10 may be a real or virtual server. The application or website hosted on endpoints 10 may be provided as a service (e.g., Software as a Service (SaaS)) in which the provider hosts the application or website and provides access to the application service over the Internet. To access the service hosted on endpoints 10, any of client devices 16 may make a request that necessitates a DNS lookup. For example, an application executed by client device 16A may send a DNS query to a DNS server to discover an IP address of an endpoint 10 hosting the service. The DNS query is a DNS message that indicates the endpoints 10 with the hostname and/or domain name.

In some examples, a service may be hosted by a group of redundant endpoints 10. For example of FIG. 1, endpoints 10A and 10C may be redundant host servers that host the same service. DNS load balancer 8 (otherwise referred to herein as "DNS server 8" or "DNS load balancing server 8") provides load balancing across the redundant host servers for the service, e.g., endpoints 10A and 10C. For example, in response to receiving a DNS query, DNS load balancer 8 retrieves IP addresses of endpoints 10A and 10C that are associated with the hostname indicated in the DNS query. The DNS load balancer 8 returns the IP addresses of endpoints 10A and 10C in a DNS response and indicates primary and secondary IP addresses that client devices 16 may use to request the service by destining a service request to any of the indicated IP addresses. The DNS response is a DNS message that indicates the endpoints as the primary and secondary IP addresses.

In order to respond with multiple IP addresses for a single DNS query, DNS load balancer 8 may be configured to offer DNS failover. In this configuration, DNS load balancer 8 maps a request hostname to a primary IP address and one or more secondary (or "failover") IP addresses that the requesting device can use if the endpoint 10 having the primary IP address is not responsive. Mappings of hostnames to IP addresses may be stored as records, such as DNS A records. A DNS response generated by DNS load balancer 8 may include one or more records that indicate a primary IP address and one or more secondary IP addresses for a hostname.

Although illustrated and described as located in the same data center 9, DNS load balancer 8 and endpoints 10 may be distributed across multiple geographic locations. Endpoints 10 may be deployed by different entities. DNS load balancer 8 may be deployed by a different entity than that of any of endpoints 10. As one example, each of endpoint 10A and endpoint 10C may use a different set of WAN links, e.g., WAN links 19A, 19B (collectively, "WAN links 19"), over WAN 7 to transport network traffic to and from CE device 18.

Users may expect services to be provided by the service provider with an acceptable level of quality, commonly referred to as Quality of Experience (QoE). The QoE may be measured based on various parameters, including latency, delay (inter frame gap), jitter, packet loss, and throughput. The users may define desired levels for one or more of the parameters for the QoE that the users expect in service contracts, e.g., service level agreements (SLAs), with the service provider. Additional information regarding SLA parameters is described in S. Bradner, et. a., "Benchmarking Methodology for Network Interconnect Devices, Network Working Group, RFC 2544, March 1999, the entire contents of which are incorporated by reference herein.

Typically, DNS load balancer 8 is unaware of the SLA and returns a DNS response having defined primary and secondary IP addresses that are agnostic to the SLA requirements. That is, DNS load balancer 8 does not measure parameters of WAN links 19 and may in some instances return a DNS response having defined a primary IP address for an endpoint in which parameters of a WAN link to the endpoint do not meet the SLA requirements or does not best satisfy the SLA requirements between customer network 6 and the endpoint. As one example, endpoints 10A and 10C may each host the same webpage. In this example, the parameters of WAN link 19A between CE device 18 and endpoint 10A does not meet a given SLA requirement (e.g., latency requirements), whereas the parameters of WAN link 19B between CE device 18 and endpoint 10C meets the given SLA requirement or are otherwise better than the parameters of WAN link 19A between CE device 18 and endpoint 10A. Without knowledge of the SLA requirements, DNS load balancer 8 may return a DNS response 20 with the IP address for endpoint 10A defined as the primary IP address, which causes the client device to connect to endpoint 10A having a network path to CE device 18 that does not meet the given SLA requirement or is otherwise less preferable than the network path from endpoint 10C to CE device 18.

In accordance with the techniques described herein, CE device 18 may intercept a DNS response from DNS load balancer 8 and may modify the priority of IP addresses indicated in the DNS response based on an SLA measurement, such as by making a different IP address the primary IP address. Using the techniques described herein, an intermediate device, e.g., CE device 18, may perform SLA measurements on WAN links 19 to DNS load-balanced endpoints 10 and re-prioritize the IP addresses indicated in a DNS response based on the SLA measurements.

In the example of FIG. 1, DNS load balancer 8 may return IP addresses for endpoints 10A and 10C in DNS response 20 and specify the IP address for endpoint 10A as the primary IP address and the IP address for endpoint 10C as a secondary IP address. Before DNS response 20 reaches one of client devices 16, CE device 18 may intercept DNS response 20 and perform SLA measurements on the IP addresses indicated in DNS response 20.

CE device 18 may determine network performance metrics, such as service level agreement (SLA) parameters that include round-trip time (RTT), jitter, and packet loss, which were influenced by applications' real-time parameters like packet size, queues and burst of packets to determine the best path. As one example implementation, CE device 18 may send a probe packet on each of the WAN links 19 to the IP addresses indicated in DNS response 20 to measure the SLA parameters of the WAN links.

In the example of FIG. 1, CE device 18 may send probe packets 22A, 22B (collectively, "probe packets 22") using various application QoE metric functions, such as Internet Control Management Protocol (ICMP), Two-Way Active Measurement Protocol (TWAMP), HyperText Transfer Protocol (HTTP), or other probing mechanisms to measure the performance metrics of WAN links 19 between CE device 18 and endpoints 10A and 10C, respectively. That is, these probing mechanisms may be used within service provider network 2 to measure both one-way and two-way or round-trip metrics of network performance, such as path connectivity, path delay, packet jitter, packet loss, packet re-ordering, and the like, e.g., on a per-subscriber basis between network devices, also referred to as hosts or endpoints. In general, a QoE measurement architecture includes network devices that each support the used protocol and perform specific roles to start data sessions and exchange test packets for the data sessions.

In the example of FIG. 1, CE device 18 may send probe packet 22A, e.g., an ICMP echo request packet, on a first WAN link, e.g., WAN link 19A, between CE device 18 and endpoint 10A. Similarly, CE device 18 may send probe packet 22B that traverses a second, different WAN link, e.g., WAN link 19B, between CE device 18 and endpoint 10C. In response to receiving the corresponding probe packet, the endpoints 10A and 10C may respond with probe packet replies, e.g., probe packet replies 24A, 24B (collectively, "probe packet replies 24"), respectively. For example, in response to receiving probe packet 22A, endpoint 10A may reply with probe packet reply 24A, e.g., an ICMP echo reply that includes the payload received in the ICMP echo request packet, e.g., probe packet 22A. Similarly, endpoint 10C may reply with probe packet reply 24B in response to receiving probe packet 22C.

CE device 18 may receive the probe packet replies 24 from endpoints 10A and 10C, respectively, and determines which of WAN links 19 to endpoints 10A and 10C meets the SLA requirements. For example, CE device 18 may determine from probe packet 22B and probe packet reply 24B that the latency of the WAN link between CE device 18 and endpoint 10C meets the latency requirement of a given SLA. CE device 18 may also determine from probe packet 22A and probe packet reply 24A that the latency of the WAN link between CE device 18 and endpoint 10A does not meet the latency requirement of the given SLA.

In response to performing the SLA measurement, i.e., determining that the WAN link between CE device 18 and endpoint 10C meets the latency requirements of the SLA, CE device 18 may modify DNS response 20 (illustrated in FIG. 1 as modified DNS response 20') to specify a new primary IP address. For example, CE device 18 may specify the IP address for endpoint 10C as the primary IP address and the IP address for endpoint 10A as a secondary IP address. In this way, client devices 16 may use the IP address of endpoint 10C to access the hosted application via WAN link 19B that meets or best satisfies the SLA parameters.

In some examples in which parameters of WAN links 19 to endpoints 10A and 10C both meet the SLA requirement or in which neither sets of parameters meets the SLA requirement or in which there are no SLA requirements, CE device 18 may determine which of the WAN links 19 has better performance metrics. For example, WAN link 19B between CE device 18 and endpoint 10C may have a lower latency than WAN link 19A between CE device 18 and endpoint 10A. In this example, CE device 18 may define the IP address for endpoint 10C as the primary IP address because the latency for WAN link 19B is lower than the latency of WAN link 19A. CE device 18 may determine that one set of performance metrics is better than another based on one or more policies applied to each of the performance metrics. The policies may be configurable. As in the previous example, CE device 18 may modify DNS response 20 to specify the IP address of the endpoint 10 having the better or otherwise preferred performance metrics as the primary IP address, and may specify the previously-indicated primary IP address as a secondary or failover IP address.

Alternatively, or additionally, CE device 18 may dynamically and proactively send probe packets 22 along WAN links between CE device 18 and endpoints 10 to determine which of the endpoints 10 best satisfies SLA requirements. Rather than sending probe packets 22 in response to intercepting DNS response 20, CE device 18 may proactively send probe packets 22 to each of the endpoints 10, or a subset of endpoints 10, in order to keep up-to-date records of the metrics for various endpoints 10 such that a service request may be swiftly routed upon receipt of a DNS query or a DNS response that specifies any one or more of the endpoints 10.

For example, CE device 18 may configure a group of endpoints 10 to which to send respective probe packets 22. CE device 18 may send the probe packets periodically. CE device 18 may also be configured to dynamically learn when to send probe packets 22. For example, the probing parameters may be dynamically adjusted depending on different application traffic parameters, such as Differentiated Services Code Point (DSCP) values, forwarding class, packet size (e.g., min, max average), and/or burst (e.g., if bursts observed, inject probe packet along with application burst to detect the application SLA metrics during the burst; if no bursts are observed, synthetic burst is not generated) of application traffic. In some examples, subsequent probe packets are generated after the first instance of application traffic is received. In other examples, if application traffic has a consistent traffic pattern (e.g., nearly constant packet per second (PPS)), probing packets may be generated at a constant level. In some examples, if the system is experiencing egress queue overflow or high CPU, the time interval (e.g., timer) for sending subsequent probing packets can be increased to reduce the amount of probing packet traffic. In some examples, if the application does not have constant traffic rate, the probing packets can be generated proportionally to the application traffic. For example, probing packets can be generated with a 1:N proportion, where N can be a number of packets of application traffic, such that a probing packet is sent for every N packets of the application.

CE device 18 may maintain a list of SLA compliant active IP addresses based on the probe results. When one of client devices 16 sends a DNS query, CE device 18 may intercept the DNS query, generate a DNS response that specifies an IP address of an endpoint 10 having preferred performance metrics as the primary IP address, and send the DNS response to client devices 16.

Dynamically learning when to send probe packets 22 may provide one or more example technical advantages. For example, CE device 18 may provide real-time or near real-time probing, a balanced approach of probing, a reduced probability of false negative and positive, no manual intervention required to improve accuracy, no need to generate synthetic burst which can degrade the system and network state, and/or dynamically adjust the load on the system based on application traffic.

FIG. 2 is a block diagram illustrating an example network device configured to select a preferred remote endpoint from a plurality of remote endpoints accessible to a client computing device via a network and indicates the preferred remote endpoint to the client computing device, in accordance with techniques described herein. Network device 200 of FIG. 2 may represent an intermediate device, e.g., CE device 18 of FIG. 1, in more detail.

Network device 200 includes a control unit 202 that includes a routing engine 204, and control unit 202 is coupled to forwarding engine 206 (otherwise referred to herein as "forwarding unit 206"). Forwarding engine 206 is associated with one or more of interface cards 232A-232N ("IFCs 232") that receive packets via inbound links 258A-258N ("inbound links 258") and send packets via outbound links 260A-260N ("outbound links 260"). IFCs 232 are typically coupled to links 258, 260 via a number of interface ports (not shown). Interfaces for inbound links 258 and outbound links 260 may represent physical interfaces, logical interfaces, or some combination thereof. Interfaces for links 258, 260 may represent local interfaces of network device 200 for WAN links to endpoints 10 of FIG. 1.

Elements of control unit 202 and forwarding engine 206 may be implemented solely in software, or hardware, or may be implemented as combinations of software, hardware, or firmware. For example, control unit 202 may include one or more processors, one or more microprocessors, digital signal processors (DSPs), application specific integrated circuits (ASICs), field programmable gate arrays (FPGAs), or any other equivalent integrated or discrete logic circuitry, or any combination thereof, which execute software instructions. In that case, the various software modules of control unit 202 may comprise executable instructions stored, embodied, or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable storage media may include random access memory (RAM), read only memory (ROM), programmable read only memory (PROM), erasable programmable read only memory (EPROM), electronically erasable programmable read only memory (EEPROM), non-volatile random access memory (NVRAM), Flash memory, a hard disk, a CD-ROM, a floppy disk, a cassette, a solid state drive, magnetic media, optical media, or other computer-readable media. Computer-readable media may be encoded with instructions corresponding to various aspects of network device 200, e.g., protocols. Control unit 202, in some examples, retrieves and executes the instructions from memory for these aspects.

Routing engine 204 includes kernel 210, which provides a run-time operating environment for user-level processes. Kernel 210 may represent, for example, a UNIX operating system derivative such as Linux or Berkeley Software Distribution (BSD). Kernel 210 offers libraries and drivers by which user-level processes may interact with the underlying system. Hardware environment 212 of routing engine 204 includes microprocessor 214 that executes program instructions loaded into a main memory (not shown in FIG. 2) from a storage device (also not shown in FIG. 2) in order to execute the software stack, including both kernel 210 and processes executing on the operating environment provided by kernel 210. Microprocessor 214 may represent one or more general- or special-purpose processors such as a digital signal processor (DSP), an application specific integrated circuit (ASIC), a field programmable gate array (FPGA), or any other equivalent logic device. Accordingly, the terms "processor" or "controller," as used herein, may refer to any one or more of the foregoing structures or any other structure operable to perform techniques described herein.

In the example of FIG. 2, routing engine 204 may execute various protocols 220 at different layers of a network stack. Network protocols may include Internet Control Message Protocol (ICMP) 222, Two-Way Active Measurement Protocol (TWAMP) 224, Hypertext Transfer Protocol (HTTP) 226, or other QoE metric functions for sending probe packets to measure SLA parameters of WAN links. Although illustrated as including ICMP 222, TWAMP 224, and HTTP 226, routing engine 204 may execute one or more of the protocols 220 shown in FIG. 1, or may include other protocols not shown. Further examples of ICMP are described in J. Mogul, "Internet Standard Subnetting Procedure," Network Working Group, Request for Comments 950, August 1985, the entire contents of which is incorporated by reference herein. Further examples of TWAMP are described in K. Hedayat, "A Two-Way Active Measurement Protocol (TWAMP)," Network Working Group, Request for Comments 5357, October 2008, the entire contents of which is incorporated by reference herein. Further examples of HTTP are described in M. Belshe, "Hypertext Transfer Protocol Version 2 (HTTP/2)," Internet Engineering Task Force, Request for Comments 7540, May 2015, the entire contents of which is incorporated by reference herein.

Routing engine 204 is responsible for the maintenance of routing information 240 to reflect the current topology of a network and other network entities to which network device 200 is connected. In particular, routing protocols periodically update routing information 240 to accurately reflect the topology of the network and other entities based on routing protocol messages received by network device 200.

Forwarding engine 206 represents hardware and logic functions that provide high-speed forwarding of network traffic. Forwarding engine 206 typically includes a set of one or more forwarding chips programmed with forwarding information 208 that maps network destinations with specific next hops and the corresponding output interface ports 260. In general, when network device 200 receives a packet via one of inbound links 258, forwarding engine 206 identifies an associated next hop for the data packet by traversing the programmed forwarding information 208 based on information within the packet. For example, routing engine 204 analyzes routing information 240 and generates forwarding information 208 in accordance with routing information 240. Forwarding information 208 may be maintained in the form of one or more tables, link lists, radix trees, databases, flat files, or any other data structures.

In accordance with the techniques described herein, routing engine 204 includes a DNS module 243 to intercept a DNS response from a DNS load balancer, and an SLA module 245 that performs SLA measurements on WAN links to IP addresses identified in the DNS response and may modify the priority of IP addresses specified in the DNS response based on the SLA measurement, such as by making a different IP address as the primary IP address.

For example, network device 200 may include DNS module 243 that identifies a plurality of IP addresses specified in the DNS response from a DNS load balancer (e.g., DNS load balancer 8 of FIG. 1). In one example, network device 200 may receive a DNS response from DNS load balancer 8 and forward the DNS response to DNS module 243. DNS module 243 may determine that the DNS response includes a plurality of IP addresses, e.g., IP addresses for endpoints 10A and 10C of FIG. 1. DNS module 243 may instruct SLA module 245 to perform SLA measurements on WAN links to endpoints 10A and 10C. In some examples, SLA module 245 may send probe packets on each WAN link to endpoints 10A and 10C to measure the performance metrics. For example, SLA module 245 may implement one or more protocols 220, such as ICMP 222, TWAMP 224, or HTTP 226, to send probe packets on outbound links 260 coupled to the WAN links to endpoints 10A and 10C.

Network device 200 may receive a response, e.g., an ICMP echo reply, for each of the delivered probe packets that includes parameters about the WAN link. For example, SLA module 245 may determine from the ICMP ping to endpoint 10C and the corresponding ICMP reply message to network device 200 that the performance metrics for the WAN link to endpoint 10C meets or best satisfies the latency requirements of the SLA. For instance, SLA module 245 may determine the transmission time of packets on the WAN link to endpoint 10C based on the ICMP ping and reply and determine that the transmission time is within the latency requirements of the SLA. Similarly, SLA module 245 may determine from the ICMP ping to endpoint 10A and the corresponding ICMP reply message to network device 200 that the performance metrics for the WAN link to endpoint 10A does not meet the latency requirements for the SLA (or is worse than the latency for the WAN link to endpoint 10C).

In response to determining which of the WAN links meets or best satisfies the requirements of the SLA parameters, SLA module 245 may modify the DNS response by re-configuring the priorities of the IP addresses. For example, in response to determining that the WAN link to endpoint 10C meets or best satisfies the SLA requirements, SLA module 245 may modify the DNS response to define endpoint 10C as a new primary IP address and endpoint 10A as the secondary IP address. In some examples, the SLA module 245 may rank the performance of the IP addresses based on the SLA measurements. In these examples, the SLA module 245 may configure the best performing WAN link as the new primary IP address.

In some examples, SLA module 245 may include one or more policies applied to each of the performance metrics. The policies may be configurable. For example, SLA module 245 may include a policy to modify a DNS response to specify the IP address of the endpoint having the better or otherwise preferred performance metrics as the primary IP address, and may specify the previously-indicated primary IP address as a secondary or failover IP address.

In some examples, SLA module 245 may include a timer 246 to proactively send probe packets along WAN links to determine which of the WAN links meet SLA requirements. For example, SLA module 245 may use timer 246 to periodically send probe packets to each of the WAN links in order to keep up-to-date records of the metrics for various WAN links. In some examples, SLA module 245 may modify timer 246 based on
different application traffic parameters, such as Differentiated Services Code Point (DSCP) values, forwarding class, packet size (e.g., min, max average), and/or burst (e.g., if bursts observed, inject probe packet along with application burst to detect the application SLA metrics during the burst; if no bursts are observed, synthetic burst is not generated) of application traffic. In some examples, if application traffic has a consistent traffic pattern (e.g., nearly constant packet per second (PPS)), timer 246 may be configured with a constant interval to periodically generate probing packets. In some examples, if the system is experiencing egress queue overflow or high CPU, timer 246 may be increased to reduce the amount of probing packet traffic. In some examples, if the application does not have constant traffic rate, the probing packets can be generated proportionally to the application traffic. For example, probing packets can be generated with a 1:N proportion, where N can be a number of packets of application traffic, such that a probing packet is sent for every N packets of the application.

FIG. 3 is a flow diagram illustrating an example operation of one or more aspects of the techniques described in this disclosure. FIG. 3 is described with respect to the network system 2 of FIG. 1.

In the example of FIG. 3, a client device 16A may send a DNS query (302). For example, client device 16 may execute a client application to access one or more application services hosted on endpoints 10. To access the service hosted on endpoints 10, client device 16A makes a request that necessitates a DNS lookup. For example, the client application of client device 16A sends a DNS query that includes a hostname to DNS load balancer 8 to receive a plurality of IP addresses associated with the hostname.

DNS load balancer 8 receives the DNS query (304) and sends a DNS response including a plurality of IP addresses (306). For example, in response to receiving the DNS query from client device 16A, DNS server 8 retrieves a plurality of IP addresses associated with the hostname included in the DNS query. In some examples, two or more endpoints 10 may host the same service. In these examples, DNS load balancer 8 retrieves the IP address of each endpoint mapped to the hostname. DNS load balancer 8 returns the plurality of IP addresses in a DNS response and indicates primary and secondary IP addresses for which client devices 16 may use to, e.g., access endpoints 10 that host the service.

CE device 18 may receive the DNS response (308). For example, CE device 18 may intercept the DNS response from the DNS load balancer 8 and may perform SLA measurements for each WAN link to the IP addresses identified in the DNS response. As one example, CE device 18 may include a DNS module 243 that identifies IP addresses specified in DNS responses from the DNS load balancer 8. DNS module 243 then instructs SLA module 245 to perform SLA measurements on the WAN links to the IP addresses. For example, SLA module 245 of CE device 18 may send a probe packet to each of the plurality of IP addresses identified in the DNS response (310). The SLA module 245 may use QoE metric functions, such as ICMP, Two-Way Active Measurement Protocol (TWAMP), HyperText Transfer Protocol (HTTP), or other probing mechanism to measure performance metrics of the WAN links.

Each of endpoints 10 identified in the DNS response may receive the probe packet (312) and send a probe packet reply (314). As one example, endpoints 10 may receive an ICMP echo request and responds with an ICMP echo reply that includes the payload of the ICMP echo request. In some examples, one or more intermediate devices generate and send responses to the probe messages for the endpoints 10.

CE device 18 may receive the probe packet response (316) and determine which of the WAN links to the endpoints has better performance metrics (318). As one example, the DNS response may indicate the IP address of endpoint 10A as the primary IP address and the IP address of endpoint 10C as the secondary IP address. In this example, SLA module 245 may determine, based on probe packets, performance metrics, such as transmission time, for the WAN links to endpoints 10A and 10C. In response to this determination, CE device 18 may modify the DNS response to specify the IP address of the endpoint having the better or otherwise preferred performance metrics as the primary IP address (320). For example, SLA module 245 may instruct DNS module 243 to modify the DNS response by setting the primary IP address to the IP address of endpoint 10C. In some examples, SLA module 245 may instruct DNS module 243 to modify the DNS response based on one or more configurable policies.

CE device 18 may send the modified DNS response including the new primary IP address for the preferred endpoint 10 to client device 16A (322). Client device 16A receives the modified DNS response (324) and may send traffic to the primary IP address specified in the modified DNS response (326).

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. Additionally or alternatively the computer-readable medium may include transient media such as carrier waves, propagated signals or transmission media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Thus, from one perspective, there have now been described techniques for selecting, with an intermediate device, a preferred remote endpoint from a plurality of remote endpoints accessible to a client computing device via a network and indicating the preferred remote endpoint to the client computing device. For example, an intermediate device may intercept a DNS response from a DNS load balancer that load balances service requests across multiple remote endpoints that provide the requested service. Based on values for one or more network performance metrics for network traffic from each of the multiple endpoints to the intermediate device, the intermediate device may modify the priority of IP addresses included in the DNS response. The intermediate device may, for instance, replace an original primary IP address in the DNS response with an IP address for another one of the remote endpoints for which the intermediate device measured better network performance metrics.

In addition to or as an alternative to the above, the following examples are described. The features described in any of the following examples may be utilized with any of the other examples described herein.
Example 1. A method comprising: receiving, by an intermediate device situated on respective network paths that traverse a network connecting a client device and a plurality of endpoints that each offers a same service and are mapped to a same hostname, a Domain Name System (DNS) message that indicates the plurality of endpoints; determining, by the intermediate device, based on respective sets of network performance metrics for the plurality of endpoints, that a first endpoint of the plurality of endpoints is preferable for offering the service to the client device; generating, by the intermediate device, in response to the DNS message and based on determining that the first endpoint is preferable for offering the service to the client device, a DNS response that specifies an Internet Protocol (IP) address of the first endpoint as a primary IP address; and sending, by the intermediate device, the DNS response to the client device to cause the client device to send a service request to the IP address of the first endpoint.
Example 2. The method of example 1, wherein determining that the first endpoint of the plurality of endpoints is preferable comprises: sending, by the intermediate device, a corresponding probe packet to each of the plurality of endpoints; receiving, by the intermediate device and from each of the plurality of endpoints, a probe packet reply corresponding to the respective probe packet for the endpoint; and determining, by the intermediate device and based on information from the probe packets and the probe packet replies, a set of network performance metrics for each of the plurality of endpoints.
Example 3. The method of example 2, wherein each of the probe packets conforms to at least one of Internet Control Message Protocol (ICMP), Two-Way Active Measurement Protocol (TWAMP), or Hypertext Transfer Protocol (HTTP).
Example 4. The method of example 1, wherein the DNS message comprises a first DNS response that indicates the plurality of endpoints as respective IP addresses, and wherein the DNS response to the client device is a second DNS response.
Example 5. The method of example 1, wherein sets of network performance metrics for the endpoints each comprises at least one of latency, delay (inter frame gap), jitter, packet loss, and throughput.
Example 6. The method of example 1, wherein the DNS message comprises a DNS query including the hostname mapped to each of the plurality of endpoints.
Example 7. The method of example 1, wherein the DNS message comprises a first DNS response that indicates the plurality of endpoints as respective IP addresses, and wherein the DNS response to the client device is a second DNS response, and wherein determining that the first endpoint of the plurality of endpoints is preferable comprises: sending, by the intermediate device in response to receiving the first DNS response, a corresponding probe packet to each of the IP addresses; receiving, by the intermediate device and from each of the IP addresses, a probe packet reply corresponding to the respective probe packet for the IP address; determining, by the intermediate device and based on information from the probe packets and the probe packet replies, a set of network performance metrics for each of the IP addresses; and determining, based on the sets of the network performance metrics, the IP address for the first endpoint is preferable.
Example 8. The method of example 1, wherein determining that the first endpoint of the plurality of endpoints is preferable comprises: sending, by the intermediate device, at a periodic interval, a corresponding probe packet to each of the plurality of endpoints; receiving, by the intermediate device and from each of the plurality of endpoints, a probe packet reply corresponding to the respective probe packet for the endpoint; and determining, by the intermediate device and based on information from the probe packets and the probe packet replies, a set of network performance metrics for each of the plurality of endpoints.
Example 9. The method of example 1, wherein determining that the first endpoint of the plurality of endpoints is preferable comprises: sending, by the intermediate device, based on application traffic parameters, a corresponding probe packet to each of the plurality of endpoints, wherein the application traffic parameters comprises at least one of Differentiated Services Code Point (DSCP) values, forwarding class, packet size, and burst of traffic from the endpoints; receiving, by the intermediate device and from each of the endpoints, a probe packet reply corresponding to the respective probe packet for the endpoint; and determining, by the intermediate device and based on information from the probe packets and the probe packet replies, a set of network performance metrics for each of the endpoints.
Example 10. The method of example 1, wherein determining that the first endpoint of the plurality of endpoints is preferable comprises: sending, by the intermediate device, based on a determination that traffic from the endpoints has a constant traffic rate, a corresponding probe packet to each of the endpoints at a constant interval; receiving, by the intermediate device and from each of the plurality of endpoints, a probe packet reply corresponding to the respective probe packet for the endpoint; and determining, by the intermediate device and based on information from the probe packets and the probe packet replies, a set of network performance metrics for each of the plurality of endpoints.
Example 11. The method of example 1, wherein determining that the first endpoint of the plurality of endpoints is preferable comprises: sending, by the intermediate device, based on a determination that traffic from the plurality of endpoints does not have a constant traffic rate, a corresponding probe packet to each of the endpoints at an interval proportional to the traffic from the endpoints; receiving, by the intermediate device and from each of the endpoints, a probe packet reply corresponding to the respective probe packet for the endpoint; and determining, by the intermediate device and based on information from the probe packets and the probe packet replies, a set of network performance metrics for each of the endpoints.
Example 12. A network device, wherein the network device is situated on respective network paths that traverse a network connecting a client device and a plurality of endpoints that each offers a same service and are mapped to a same hostname, the network device comprising: a memory; and one or more processors in communication with the memory, the one or more processors configured to: receive a Domain Name System (DNS) message that indicates the plurality of endpoints; determine, based on respective sets of network performance metrics for the plurality of endpoints, that a first endpoint of the plurality of endpoints is preferable for offering the service to the client device; generate, in response to the DNS message and based on determining that the first endpoint is preferable for offering the service to the client device, a DNS response that specifies an Internet Protocol (IP) address of the first endpoint as a primary IP address; and send, the DNS response to the client device to cause the client device to send a service request to the IP address of the first endpoint.
Example 13. The network device of example 12, wherein, to determine that the first endpoint of the plurality of endpoints is preferable, the one or more processors are configured to: send a corresponding probe packet to each of the plurality of endpoints; receive, from each of the plurality of endpoints, a probe packet reply corresponding to the respective probe packet for the endpoint; and determine, based on information from the probe packets and the probe packet replies, a set of network performance metrics for each of the plurality of endpoints.
Example 14. The network device of example 13, wherein each of the probe packets conforms to at least one of Internet Control Message Protocol (ICMP), Two-Way Active Measurement Protocol (TWAMP), or Hypertext Transfer Protocol (HTTP).
Example 15. The network device of example 12, wherein the DNS message comprises a first DNS response that indicates the plurality of endpoints as respective IP addresses, and wherein the DNS response to the client device is a second DNS response, and wherein, to determine that the first endpoint of the plurality of endpoints is preferable, the one or more processors are further configured to: send, in response to receiving the first DNS response, a corresponding probe packet to each of the IP addresses; receive, from each of the IP addresses, a probe packet reply corresponding to the respective probe packet for the IP address; determine, based on information from the probe packets and the probe packet replies, a set of network performance metrics for each of the IP addresses; and determine, based on the sets of the network performance metrics, the IP address for the first endpoint is preferable.
Example 16. The network device of example 12, wherein, to determine that the first endpoint of the plurality of endpoints is preferable, the one or more processors are configured to: send, at a periodic interval, a corresponding probe packet to each of the plurality of endpoints; receive, from each of the plurality of endpoints, a probe packet reply corresponding to the respective probe packet for the endpoint; and determine, based on information from the probe packets and the probe packet replies, a set of network performance metrics for each of the plurality of endpoints.
Example 17. The network device of example 12, wherein, to determine that the first endpoint of the plurality of endpoints is preferable, the one or more processors are configured to: send, based on application traffic parameters, a corresponding probe packet to each of the plurality of endpoints, wherein the application traffic parameters comprises at least one of Differentiated Services Code Point (DSCP) values, forwarding class, packet size, and burst of traffic from the endpoints; receive, from each of the endpoints, a probe packet reply corresponding to the respective probe packet for the endpoint; and determine, based on information from the probe packets and the probe packet replies, a set of network performance metrics for each of the endpoints.
Example 18. The network device of example 12, wherein, to determine that the first endpoint of the plurality of endpoints is preferable, the one or more processors are configured to: send, based on a determination that traffic from the endpoints has a constant traffic rate, a corresponding probe packet to each of the endpoints at a constant interval; receive, from each of the plurality of endpoints, a probe packet reply corresponding to the respective probe packet for the endpoint; and determine, based on information from the probe packets and the probe packet replies, a set of network performance metrics for each of the plurality of endpoints.
Example 19. The network device of example 12, wherein, to determine that the first endpoint of the plurality of endpoints is preferable, the one or more processors are configured to: send based on a determination that traffic from the plurality of endpoints does not have a constant traffic rate, a corresponding probe packet to each of the endpoints at an interval proportional to the traffic from the endpoints; receive, from each of the endpoints, a probe packet reply corresponding to the respective probe packet for the endpoint; and determine, based on information from the probe packets and the probe packet replies, a set of network performance metrics for each of the endpoints.
Example 20. A computer-readable storage medium of a network device situated on respective network paths that traverse a network connecting a client device and a plurality of endpoints that each offers a same service and are mapped to a same hostname, the network device storing instructions that cause a processor to: receive a Domain Name System (DNS) message that indicates the plurality of endpoints; determine, based on respective sets of network performance metrics for the plurality of endpoints, that a first endpoint of the plurality of endpoints is preferable for offering the service to the client device; generate, in response to the DNS message and based on determining that the first endpoint is preferable for offering the service to the client device, a DNS response that specifies an Internet Protocol (IP) address of the first endpoint as a primary IP address; and send, the DNS response to the client device to cause the client device to send a service request to the IP address of the first endpoint.

Moreover, any of the specific features set forth in any of the examples described above may be combined into beneficial examples of the described techniques. That is, any of the specific features are generally applicable to all examples of the disclosure. Various examples of the techniques have been described. These and other examples are within the scope of the following claims.

## Claims

1. A method comprising:
receiving, by an intermediate device situated on respective network paths that traverse a network connecting a client device and a plurality of endpoints that each offers a same service and are mapped to a same hostname, a Domain Name System (DNS) message that indicates the plurality of endpoints;
determining, by the intermediate device, based on respective sets of network performance metrics for the plurality of endpoints, that a first endpoint of the plurality of endpoints is preferable for offering the service to the client device;
generating, by the intermediate device, in response to the DNS message and based on determining that the first endpoint is preferable for offering the service to the client device, a DNS response that specifies an Internet Protocol (IP) address of the first endpoint as a primary IP address; and
sending, by the intermediate device, the DNS response to the client device to cause the client device to send a service request to the IP address of the first endpoint.

2. The method of claim 1, wherein determining that the first endpoint of the plurality of endpoints is preferable comprises:
sending, by the intermediate device, a corresponding probe packet to each of the plurality of endpoints;
receiving, by the intermediate device and from each of the plurality of endpoints, a probe packet reply corresponding to the respective probe packet for the endpoint; and
determining, by the intermediate device and based on information from the probe packets and the probe packet replies, a set of network performance metrics for each of the plurality of endpoints.

3. The method of claim 2, wherein each of the probe packets conforms to at least one of Internet Control Message Protocol (ICMP), Two-Way Active Measurement Protocol (TWAMP), or Hypertext Transfer Protocol (HTTP).

4. The method of any of claim 1,
wherein the DNS message comprises a first DNS response that indicates the plurality of endpoints as respective IP addresses, and
wherein the DNS response to the client device is a second DNS response.

5. The method of any of claims 1-4, wherein sets of network performance metrics for the endpoints each comprises at least one of latency, delay (inter frame gap), jitter, packet loss, and throughput.

6. The method of any of claims 1-5, wherein the DNS message comprises a DNS query including the hostname mapped to each of the plurality of endpoints.

7. The method of any of claims 1 and 5,
wherein the DNS message comprises a first DNS response that indicates the plurality of endpoints as respective IP addresses, and
wherein the DNS response to the client device is a second DNS response, and wherein determining that the first endpoint of the plurality of endpoints is preferable comprises:
sending, by the intermediate device in response to receiving the first DNS response, a corresponding probe packet to each of the IP addresses;
receiving, by the intermediate device and from each of the IP addresses, a probe packet reply corresponding to the respective probe packet for the IP address;
determining, by the intermediate device and based on information from the probe packets and the probe packet replies, a set of network performance metrics for each of the IP addresses; and
determining, based on the sets of the network performance metrics, the IP address for the first endpoint is preferable.

8. The method of any of claims 1, 5 and 6, wherein determining that the first endpoint of the plurality of endpoints is preferable comprises:
sending, by the intermediate device, at a periodic interval, a corresponding probe packet to each of the plurality of endpoints;
receiving, by the intermediate device and from each of the plurality of endpoints, a probe packet reply corresponding to the respective probe packet for the endpoint; and
determining, by the intermediate device and based on information from the probe packets and the probe packet replies, a set of network performance metrics for each of the plurality of endpoints.

9. The method of any of claims 1, 5 and 6, wherein determining that the first endpoint of the plurality of endpoints is preferable comprises:
sending, by the intermediate device, based on application traffic parameters, a corresponding probe packet to each of the plurality of endpoints, wherein the application traffic parameters comprises at least one of Differentiated Services Code Point (DSCP) values, forwarding class, packet size, and burst of traffic from the endpoints;
receiving, by the intermediate device and from each of the endpoints, a probe packet reply corresponding to the respective probe packet for the endpoint; and
determining, by the intermediate device and based on information from the probe packets and the probe packet replies, a set of network performance metrics for each of the endpoints.

10. The method of any of claims 1, 5 and 6, wherein determining that the first endpoint of the plurality of endpoints is preferable comprises:
sending, by the intermediate device, based on a determination that traffic from the endpoints has a constant traffic rate, a corresponding probe packet to each of the endpoints at a constant interval;
receiving, by the intermediate device and from each of the plurality of endpoints, a probe packet reply corresponding to the respective probe packet for the endpoint; and
determining, by the intermediate device and based on information from the probe packets and the probe packet replies, a set of network performance metrics for each of the plurality of endpoints.

11. The method of any of claims 1, 5 and 6, wherein determining that the first endpoint of the plurality of endpoints is preferable comprises:
sending, by the intermediate device, based on a determination that traffic from the plurality of endpoints does not have a constant traffic rate, a corresponding probe packet to each of the endpoints at an interval proportional to the traffic from the endpoints;
receiving, by the intermediate device and from each of the endpoints, a probe packet reply corresponding to the respective probe packet for the endpoint; and
determining, by the intermediate device and based on information from the probe packets and the probe packet replies, a set of network performance metrics for each of the endpoints.

12. A network device, wherein the network device is situated on respective network paths that traverse a network connecting a client device and a plurality of endpoints that each offers a same service and are mapped to a same hostname, the network device comprising:
a memory; and
one or more processors in communication with the memory, the one or more processors configured to:
receive a Domain Name System (DNS) message that indicates the plurality of endpoints;
determine, based on respective sets of network performance metrics for the plurality of endpoints, that a first endpoint of the plurality of endpoints is preferable for offering the service to the client device;
generate, in response to the DNS message and based on determining that the first endpoint is preferable for offering the service to the client device, a DNS response that specifies an Internet Protocol (IP) address of the first endpoint as a primary IP address; and
send, the DNS response to the client device to cause the client device to send a service request to the IP address of the first endpoint.

13. The network device of claim 12 comprising means for performing the method recited by any of claims 2-11.

14. A computer-readable storage medium encoded with instructions for causing one or more programmable processors to perform the method recited by any of claims 1-11.
